# EUROPÄISCHE PATENTSCHRIFT

(11) **EP 1 356 651 B1**
(45) Veröffentlichungstag und Bekanntmachung des Hinweises auf die Patenterteilung: **22.09.2004**
(21) Anmeldenummer: 01991715.2
(22) Anmeldetag: 28.12.2001
(51) Int. Cl.: H04L 27/10, H03C 3/09

(54) **ABGLEICHVERFAHREN FÜR EINEN TRANSCEIVER MIT ZWEI-PUNKT-MODULATION**
COMPENSATION METHOD FOR A TRANSCEIVER USING TWO-POINT MODULATION
PROCEDE D'EQUILIBRAGE D'UN EMETTEUR-RECEPTEUR PAR MODULATION A DEUX POINTS

(30) Priorität: 02.02.2001 DE 10104775
(43) Veröffentlichungstag der Anmeldung: 29.10.2003
(73) Patentinhaber: Infineon Technologies AG, 81669 München (DE)
(72) Erfinder: HAMMES, Markus, 46539 Dinslaken (DE); VAN WAASEN, Stefan, 47178 Duisburg (DE)
(74) Vertreter: Graf Lambsdorff, Matthias, Dr.
(86) Internationale Anmeldenummer: PCT/DE2001/004956
(87) Internationale Veröffentlichungsnummer: WO 2002/062029

(56) Entgegenhaltungen:
- EP-A- 1 063 766
- US-A- 5 983 077

## Beschreibung

Die Erfindung betrifft ein Abgleichverfahren für nach dem Prinzip der Zwei-Punkt-Modulation arbeitende PLL-Schaltungen, und bezieht sich insbesondere auf ein Verfahren zum Amplitudenabgleich in Transceivern für Mobilfunksysteme mit einer nach dem Prinzip der Zwei-Punkt-Modulation arbeitendenden PLL-Schaltung im Sender und einem nach dem Limiter-Diskriminator-Prinzip arbeitenden Empfänger.

Eine aufwandsarme Realisierung eines Senderkonzeptes für Transceiver in Mobilfunksystemen bieten Sender mit einem nach dem an sich bekannten Prinzip der Zwei-Punkt-Modulation arbeitenden Modulator, bei dem es möglich ist, eine PLL (Phase-Locked-Loop = Nachlaufsynchronisation)-Schaltung mit Signalen zu modulieren, die eine Bandbreite größer als die PLL-Bandbreite besitzen, und dadurch ein frequenzunabhängiges Übertragungsverhalten der PLL-Schaltung zu erzielen.

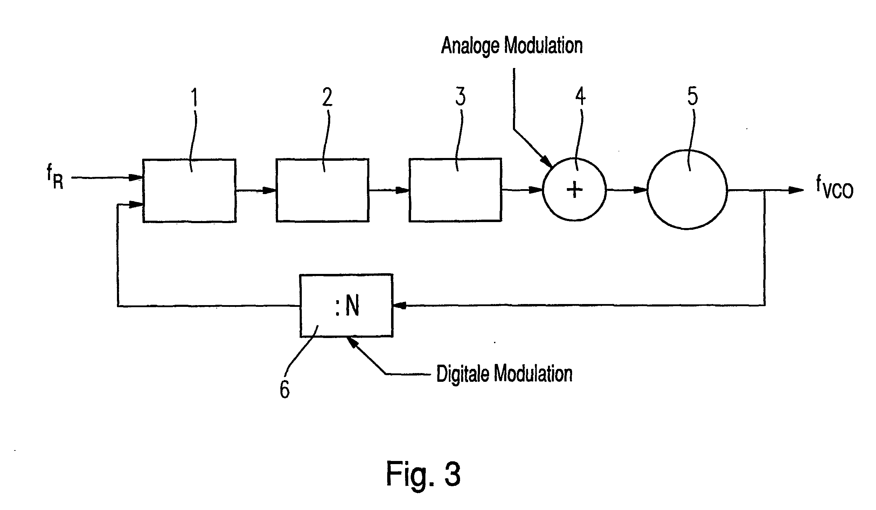

Fig. 3 zeigt vereinfacht eine bekannte, nach dem Prinzip der Zwei-Punkt-Modulation arbeitende PLL-Schaltung für einen solchen Sender mit einem Phasenfrequenzdetetektor 1, einer Ladungspumpe 2, einem Schleifenfilter 3 und einem spannungsgesteuerten Oszillator (VCO) 5 im Vorwärtszweig und einem Frequenzteiler 6 mit einem Teilerwert N im Rückführungszweig des Modulators.

US 5 983 077 veröffentlicht eine solche PLL-Schaltung.

Zur Erzeugung der Zwei-Punkt-Modulation werden an einem vor dem spannungsgesteuerten Oszillator 5 im Vorwärtszweig liegenden Summationspunkt 4, der einen Hochpaßpunkt repräsentiert (eine analoge Modulation, die an diesem Punkt eingespeist wird, wirkt mit einer Hochpaßfilterung durch die geschlossene Regelschleife auf den Ausgang), eine analoge Modulation und an dem einen Tiefpaßpunkt repräsentierenden Frequenzteiler 6 im Rückführungszweig eine digitale Modulation in die vor dem eigentlichen Sendevorgang auf die Kanalmittenfrequenz eingeschwungene PLL-Schaltung eingebracht. Die beiden Modulationssignale überlagern sich sodann am Ausgang der PLL-Schaltung derart, daß das gewünschte frequenzunabhängige Verhalten resultiert.

Bei dieser Art des Senderkonzeptes bleibt die PLL-Regelschleife geschlossen. Aufgrund von Anforderungen an das Rauschverhalten wird die Bandbreite der PLL-Regelschleife zudem kleiner ausgelegt, als dies zur Übertragung modulierter Daten erforderlich wäre. Daher wird neben der reinen digitalen Modulation die analoge Modulation zur Kompensation der eingeschränkten Bandbreite herangezogen, wobei zusätzlich zu einer zeitlichen Gleichphasigkeit der analogen und der digitalen Modulation der Übereinstimmung der Amplituden dieser beiden Modulationssignale wesentliche Bedeutung zukommt.

Aufgrund von Herstellungstoleranzen bei den zur analogen Modulation eingesetzten Komponenten im Hinblick auf beispielsweise die Modulationssteilheit, die Erzeugung der Modulationsspannung und dergleichen ist es erforderlich, nach der Herstellung einen Amplitudenabgleich zwischen der analogen und der digitalen Modulation durchzuführen. Sollen darüber hinaus auch durch Temperaturänderungen bedingte Einflüsse berücksichtigt werden, muß dieser Amplitudenabgleich vor jedem Sendevorgang erfolgen.

Ein bekanntes Abgleichverfahren besteht darin, die beiden Modulationen einzubringen, das Ausgangssignal der PLL-Schaltung einem externen Meßempfänger zuzuführen, dort zu demodulieren und einen entsprechenden Amplitudenabgleich vorzunehmen. Aufgrund des nichtlinearen Verhaltens des spannungsgesteuerten Oszillators 5 bezüglich der Frequenz als Funktion der Spannung muß ein solcher Amplitudenabgleich jedoch für jeden einer Vielzahl von Kanälen durchgeführt werden, welches zu einer langen Meßdauer führt und darüber hinaus die Ablage der Abgleichinformationen in einem Speicher erfordert. Ferner können hierbei aus Temperaturänderungen resultierende Einflüsse nicht berücksichtigt werden.

Ein weiteres bekanntes Abgleichverfahren beinhaltet den Empfang und die Demodulation durch den Empfängerabschnitt des Sender/Empfängers. Hierzu ist jedoch eine vollständige zweite PLL-Schaltung im Empfänger erforderlich, die es zusätzlich zu einem wesentlich höheren Schaltungsaufwand und dadurch bedingt höheren Kosten notwendig macht, bei Einsatz eines Heterodyn-Empfängers diesen auf eine Frequenz einzustellen, die der Differenz zwischen Sendefrequenz und Zwischenfrequenz entspricht.

Die bekannten Abgleichverfahren sind somit dahingehend nachteilig, daß mit diesen zum einen eine lange Meßdauer und zum anderen ein hoher Geräte- bzw. Schaltungsaufwand mit entsprechend hohen Kosten verbunden ist.

Der Erfindung liegt daher die Aufgabe zugrunde, ein Abgleichverfahren für einen Sender/Empfänger mit Zwei-Punkt-Modulation bereitzustellen, welches aufwandsarm einen schnellen Amplitudenabgleich ermöglicht und die Berücksichtigung von Temperatureinflüssen erlaubt.

Diese Aufgabe wird erfindungsgemäß durch ein Verfahren gemäß Patentanspruch 1 gelöst.

Vorteilhafte Weiterbildungen des Verfahrens sind Gegenstand der beigefügten Unteransprüche.

Erfindungsgemäß ist somit ein Abgleichverfahren für einen Sender/Empfänger mit einer nach dem Prinzip der Zwei-Punkt-Modulation arbeitenden PLL-Schaltung gekennzeichnet durch die nachfolgenden Schritte: Wählen der Amplitude eines analogen Modulationssignals entsprechend dem Modulationshub eines festgelegten digitalen Modulationssignals; Einprägen einer vorbestimmten Datenfolge des analogen Modulationssignals; Ermitteln des Modulationshubs des analogen Modulationssignals an einem Ausgang des Empfängers; und Korrigieren der Amplitude des analogen Modulationssignals in Übereinstimmung mit der Differenz zwischen dem Modulationshub des digitalen Modulationssignals und dem ermittelten Modulationshub des analogen Modulationssignals.

Vor der Durchführung des Abgleichvorgangs wird die PLL-Schaltung vor einem Sendevorgang auf eine Kanalmittenfrequenz eingestellt, um einen eingeschwungenen Zustand bereitzustellen.

Bevorzugt wird das digitale Modulationssignal während des Abgleichvorgangs deaktiviert, um eine Ausregelung der analogen Modulation bei der Wahl einer Anfangsamplitude des analogen Modulationssignals zu unterdrücken.

Weiter bevorzugt wird die vorbestimmte Datenfolge des analogen Modulationssignals an einem vorbestimmten Hochpaßpunkt in den Vorwärtszweig der PLL-Schaltung eingeprägt, und wird das digitale Modulationssignal an einem vorbestimmten Tiefpaßpunkt in den Rückführungszweig der PLL-Schaltung eingeprägt, wodurch eine für das Verhalten der Anordnung vorteilhafte Gesamtübertragungsfunktion der PLL-Schaltung resultiert.

In besonders geeigneter Weise wird hierbei das digitale Modulationssignal direkt in einen ersten Frequenzteiler eingeprägt.

Wird das Ausgangssignal der PLL-Schaltung in einen in einem aus dem Rückführungszweig abzweigenden Signalweg liegenden zweiten Frequenzteiler geleitet, in dem zweiten Frequenzteiler geteilt und sodann als eines von Eingangssignalen dem Empfänger zugeführt, kann eine vorteilhaft eine zweite PLL-Schaltung im Empfänger entfallen.

Bevorzugt wird hierbei der Teilerwert des zweiten Frequenzteilers derart gewählt, daß die Ausgangsfrequenz des zweiten Frequenzteilers der Zwischenfrequenz des Empfängers entspricht.

Alternativ kann als Teilerwert des zweiten Frequenzteilers ein ganzzahliger Wert gewählt werden derart, daß die Ausgangsfrequenz des zweiten Frequenzteilers im wesentlichen in der Nähe der Zwischenfrequenz des Empfängers liegt, woraus sich unter Berücksichtigung des tatsächlichen Frequenzbereichs des Empfängers ein zusätzlicher Freiheitsgrad für die Wahl des Teilerwerts des zweiten Frequenzteilers ergibt.

Die Erfindung wird nachstehend anhand eines bevorzugten Ausführungsbeispiels unter Bezugnahme auf die beigefügte Zeichnung näher beschrieben. Es zeigen:
- Fig. 1: eine nach dem Prinzip der Zwei-Punkt-Modulation arbeitende PLL-Schaltungsanordnung, bei der ein Abgleichverfahren für einen Sender/Empfänger unter Verwendung der Zwei-Punkt-Modulation gemäß einem bevorzugten Ausführungsbeispiel anwendbar ist;
- Fig. 2: ein vereinfachtes Ablaufdiagramm des Abgleichverfahrens gemäß dem bevorzugten Ausführungsbeispiel; und
- Fig. 3: vereinfacht eine bekannte, nach dem Prinzip der Zwei-Punkt-Modulation arbeitende PLL-Schaltung.

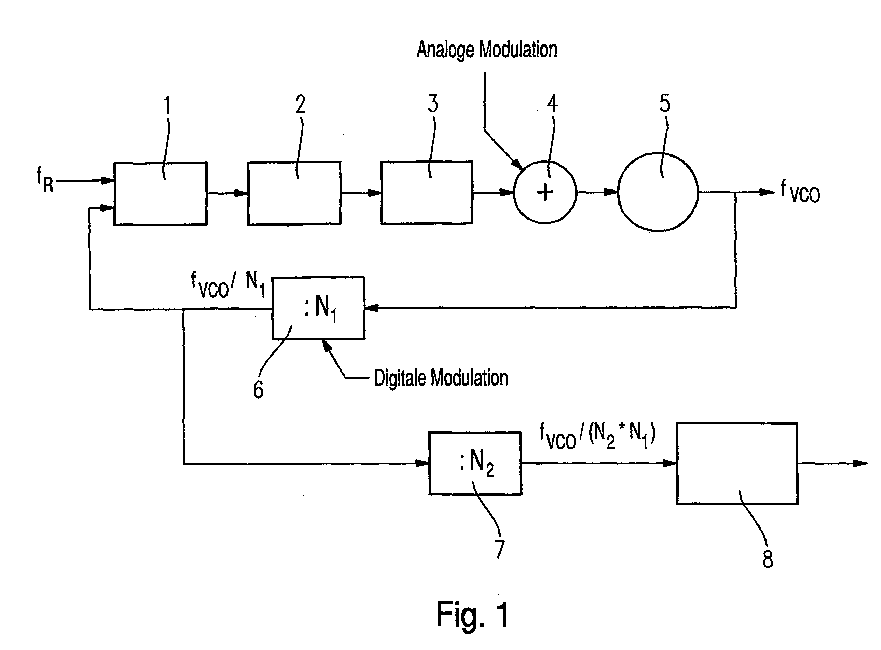

Fig. 1 zeigt eine nach dem Prinzip der Zwei-Punkt-Modulation arbeitende PLL-Schaltungsanordnung, bei der ein Abgleichverfahren für einen Sender/Empfänger (Transceiver) unter Verwendung der Zwei-Punkt-Modulation gemäß einem bevorzugten Ausführungsbeispiel anwendbar ist.

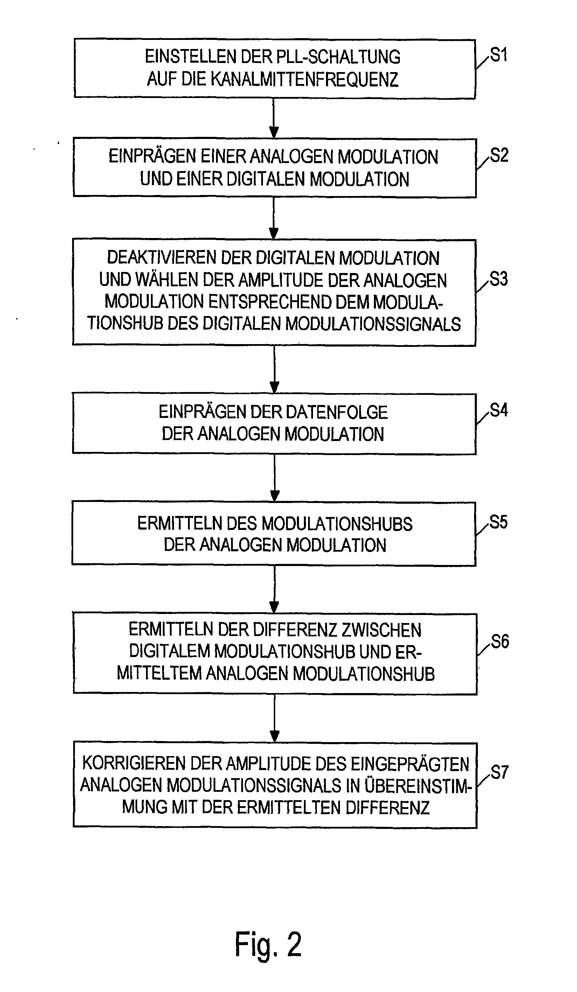

Wie bei der bekannten PLL-Schaltung gemäß Fig. 2 sind bei der die PLL-Schaltung nach Fig. 1 ein Phasenfrequenzdetetektor 1, eine Ladungspumpe 2, ein Schleifenfilter 3, ein Summationspunkt 4 und ein spannungsgesteuerter Oszillator 5 im Vorwärtszweig sowie ein erster Frequenzteiler 6 mit einem ersten Teilerwert N₁ im Rückführungszweig der PLL-Schaltung vorgesehen, und befindet sich die PLL-Schaltung vor einem Sendevorgang ebenfalls bereits in einem auf die Kanalmittenfrequenz eingeschwungenen Zustand.

Darüber hinaus ist in einem nach dem ersten Frequenzteiler 6 aus dem Rückführungszweig der PLL-Schaltung abzweigenden Signalweg ein zweiter Frequenzteiler 7 mit einem zweiten Teilerwert N₂ vorgesehen, dem ein FM-Demodulator 8 als Teil eines an sich bekannten, nach dem Limiter-Diskriminator-Prinzip arbeitenden (nicht dargestellten) Heterodyn-Empfängers nachgeschaltet ist.

Nachstehend wird die Funktionsweise der in Fig. 1 gezeigten Schaltungsanordnung näher beschrieben.

An einem ersten Eingang des Phasenfrequenzdetektors 1 wird der PLL-Schaltung zunächst eine Referenzfrequenz f_{R} zugeführt. Die Referenzfrequenz f_{R} wird in dem Phasenfrequenzdetektor 1 mit der Frequenz im Rückführungsweg hinter dem ersten Frequenzteiler 6 verglichen und es wird ein Steuersignal erzeugt, welches in der Ladungspumpe 2, dem Schleifenfilter 3 und dem spannungsgesteuerten Oszillator 5 auf bekannte Art und Weise verarbeitet wird. Am Ausgang des spannungsgesteuerten Oszillators erscheint somit ein Ausgangssignal der Frequenz f_{vco}. Das Ausgangssignal f_{vco} des spannungsgesteuerten Oszillators 5 wird dem im Rückführungszweig der PLL-Schaltung liegenden ersten Frequenzteiler 6 mit dem Teilerwert N₁ zugeführt, dessen Ausgang demzufolge ein Signal mit der Frequenz f_{vco}/N₁ liefert.

Zur Erzeugung der Zwei-Punkt-Modulation wird an dem vor dem spannungsgesteuerten Oszillator 5 im Vorwärtszweig der PLL-Schaltung liegenden Summationspunkt 4 eine analoge Modulation und an dem ersten Frequenzteiler 6 im Rückführungszweig der PLL-Schaltung eine digitale Modulation in die PLL-Schaltung eingebracht.

Das digital modulierte Ausgangssignal f_{vco}/N₁ des ersten Frequenzteilers 6 wird sodann einem zweiten Eingang des Phasenfrequenzdetektors 1 und einem in einem aus dem Rückführungszweig der PLL-Schaltung nach dem ersten Frequenzteiler 6 verzweigenden Signalweg liegenden zweiten Frequenzteiler 7 mit dem Teilerwert N₂ zugeführt.

Der zweite Frequenzteiler 7 teilt das Ausgangssignal f_{vco}/N₁ des ersten Frequenzteilers 6 entsprechend seinem Teilerwert N₂, so daß der Ausgang des zweiten Frequenzteilers 7 ein weiter geteiltes Ausgangssignal der Frequenz f_{vco}/(N₂*N₁) liefert.

Das Ausgangssignal f_{vco}/(N₂*N₁) des zweiten Frequenzteilers 7 wird sodann dem nachgeschalteten FM-Demodulator 8 zugeführt und durch diesen demoduliert.

Bevorzugt wird hierbei der Teilerwert N₂ des zweiten Frequenzteilers 7 so gewählt, daß die Ausgangsfrequenz f_{vco}/(N₂*N₁) der Zwischenfrequenz des Heterodyn-Empfängers entspricht, wodurch ein zweiter vollständiger PLL-Regelkreis im Empfänger zum Heruntermischen des Ausgangsignals f_{vco} des spannungsgesteuerten Oszillators 5 vorteilhaft entfallen kann.

Da aufgrund möglicher Frequenzoffsets der Empfänger im allgemeinen für einen größeren Frequenzbereich geeignet ist, kann der Teilerwert N₂ des zweiten Frequenzteilers 7 alternativ auch so gewählt werden, daß dessen Ausgangsfrequenz f_{vco}/(N₂*N₁), einem Frequenzoffset entsprechend, im wesentlichen in der Nähe der Zwischenfrequenz liegt. Die genaue Lage der Ausgangsfrequenz f_{vco}/(N₂*N₁) ist jedoch bekannt und kann daher entsprechend berücksichtigt werden.

Hieraus resultiert vorteilhaft ein zusätzlicher Freiheitsgrad für die Wahl des Teilerwerts N₂, wie nachstehend noch zu erläutern ist.

Das Ausgangssignal des Frequenzteilers 7 ist ferner ein digitales Signal. Da der nachgeschaltete Empfänger nach dem Limiter-Diskriminator-Prinzip arbeitet und zur Weiterverarbeitung der wertdiskreten, zeitkontinuierlichen Ausgangssignale des Limiters zudem sowohl in digitaler als auch analoger Bauweise ausgeführt sein kann, eignet sich bei einer Einspeisung nach dem Limiter infolgedessen das digitale Ausgangssignal des Frequenzteilers 7 als Eingangssignal für diesen Empfänger.

Es wird angemerkt, daß bei Verarbeitung komplexwertiger Signale äquivalent zu den komplexwertigen Limiter-Ausgangssignalen zwei um 90° phasenverschobene Ausgangssignale des zweiten Frequenzteilers 7 benötigt werden.

Eine derartige Ausgestaltung ist insbesondere bei geradzahligen Teilerwerten N₂ möglich, welche aufgrund des vorstehend erwähnten, zusätzlichen Freiheitsgrads vorteilhaft wählbar sind.

Nachstehend wird das auf die vorstehend beschriebene PLL-Schaltung anwendbare Abgleichverfahren unter Bezugnahme auf das Ablaufdiagramm nach Fig. 2 näher beschrieben.

In einem ersten Schritt S1 wird die PLL-Schaltung vor einem Sendevorgang vorbereitend auf die Kanalmittenfrequenz eingestellt. Eine solche Einstellung ist betriebsbedingt auch ohne Durchführung des Abgleichverfahrens erforderlich.

Sodann werden in einem zweiten Schritt S2 eine analoge Modulation und eine digitale Modulation eingeprägt, wie vorstehend beschrieben wurde.

In einem dritten Schritt S3 wird die an dem ersten Frequenzteiler 6 eingebrachte digitale Modulation deaktiviert und die Amplitude des an dem Summationspunkt 4 eingebrachten analogen Modulationssignals so gewählt, daß sie dem eingestellten Modulationshub des digitalen Modulationssignals, welches aufgrund seiner digitalen Form keine Toleranzen aufweist, entspricht.

Die digitale Modulation wird somit während des Abgleichvorgangs deaktiviert und nur die analoge Modulation verwendet. Da die geschlossene PLL-Regelschleife die analoge Modulation ausregeln würde, muß die Bewertung des Einflusses dieser Modulation in der Einschwingphase zu vorab festgelegten Zeiten erfolgen.

In einem vierten Schritt S4 wird sodann eine geeignete Datenfolge der analogen Modulation eingeprägt.

In einem fünften Schritt S5 wird darauffolgend am Ausgang des Demodulators 8 des Empfängers der durch die analoge Modulation erzeugte Modulationshub ermittelt.

In einem sechsten Schritt S6 wird danach die Differenz zwischen dem Modulationshub des nominell eingestellten digitalen Modulationssignals und dem ermittelten Modulationshub des eingeprägten analogen Modulationssignals bestimmt.

Abschließend wird in einem siebten Schritt S7 die Amplitude des eingeprägten analogen Modulationssignals in Übereinstimmung mit der Differenz zwischen dem nominell eingestellten digitalen Modulationshub und dem ermittelten analogen Modulationshub korrigiert.

Mit dem beschriebenen Verfahren kann somit auf einfache Art und Weise eine quantitative Aussage über den auftretenden Fehler erhalten und ein geeigneter Korrekturwert durch einfache Differenzbildung bestimmt werden.

Wie vorstehend beschrieben wurde, wird bei einem Verfahren zum Amplitudenabgleich in Transceivern für Mobilfunksysteme mit einer nach dem Prinzip der Zwei-Punkt-Modulation arbeitendenden PLL-Schaltung im Sender und einem nach dem Limiter-Diskriminator-Prinzip arbeitenden Empfänger die Amplitude eines analogen Modulationssignals entsprechend einem Modulationshub eines festgelegten digitalen Modulationssignals gewählt, eine vorbestimmte Datenfolge des analogen Modulationssignals eingeprägt, der Modulationshub des analogen Modulationssignals am Ausgang eines Demodulators des Empfängers ermittelt, und die Amplitude des analogen Modulationssignals in Übereinstimmung mit der Differenz zwischen dem Modulationshub des digitalen Modulationssignals und dem ermittelten Modulationshub des analogen Modulationssignals korrigiert.

## Patentansprüche

1. Abgleichverfahren für einen Sender/Empfänger mit einer nach dem Prinzip der Zwei-Punkt-Modulation arbeitenden PLL-Schaltung (1 bis 6)
**gekennzeichnet durch**
- das Wählen der Amplitude eines analogen Modulationssignals entsprechend dem Modulationshub eines festgelegten digitalen Modulationssignals;
- das Einprägen einer vorbestimmten Datenfolge des analogen Modulationssignals;
- das Ermitteln des Modulationshubs des analogen Modulationssignals an einem Ausgang des Empfängers (8); und
- das Korrigieren der Amplitude des analogen Modulationssignals in Übereinstimmung mit der Differenz zwischen dem Modulationshub des digitalen Modulationssignals und dem ermittelten Modulationshub des analogen Modulationssignals.

2. Verfahren nach Anspruch 1,
**dadurch gekennzeichnet, daß**
- die PLL-Schaltung (1 bis 6) vor einem Sendevorgang auf eine Kanalmittenfrequenz eingestellt wird.

3. Verfahren nach Anspruch 1,
**dadurch gekennzeichnet, daß**
- das digitale Modulationssignal während des Abgleichvorgangs deaktiviert wird.

4. Verfahren nach Anspruch 1,
**dadurch gekennzeichnet, daß**
- die vorbestimmte Datenfolge des analogen Modulationssignals an einem vorbestimmten Hochpaßpunkt (4) in den Vorwärtszweig der PLL-Schaltung (1 bis 6) eingeprägt wird.

5. Verfahren nach Anspruch 1,
**dadurch gekennzeichnet, daß**
- das digitale Modulationssignal an einem vorbestimmten Tiefpaßpunkt (6) in den Rückführungszweig der PLL-Schaltung (1 bis 6) eingeprägt wird.

6. Verfahren nach Anspruch 5,
**dadurch gekennzeichnet, daß**
- das digitale Modulationssignal in einen ersten Frequenzteiler (6) eingeprägt wird.

7. Verfahren nach einem der vorangehenden Ansprüche,
**dadurch gekennzeichnet, daß**
- das Ausgangssignal der PLL-Schaltung (1 bis 6) in einen in einem aus dem Rückführungszweig abzweigenden Signalweg liegenden zweiten Frequenzteiler (7) geleitet wird.

8. Verfahren nach Anspruch 7,
**dadurch gekennzeichnet, daß**
- das Ausgangssignal der PLL-Schaltung (1 bis 6) in dem zweiten Frequenzteiler (7) geteilt und sodann als eines von Eingangssignalen dem Empfänger (8) zugeführt wird.

9. Verfahren nach einem der Ansprüche 6 bis 8,
**dadurch gekennzeichnet, daß**
- der Teilerwert (N₂) des zweiten Frequenzteilers (7) derart gewählt wird, daß die Ausgangsfrequenz des zweiten Frequenzteilers (7) der Zwischenfrequenz des Empfängers (8) entspricht.

10. Verfahren nach einem der Ansprüche 6 bis 8,
**dadurch gekennzeichnet, daß**
- als Teilerwert (N₂) des zweiten Frequenzteilers (7) ein ganzzahliger Wert gewählt wird.

11. Verfahren nach Anspruch 10,
**dadurch gekennzeichnet, daß**
- der ganzzahlige Wert derart gewählt wird, daß die Ausgangsfrequenz des zweiten Frequenzteilers (7) in der Nähe der Zwischenfrequenz des Empfängers (8) zu liegen kommt.

## Claims

1. Trimming method for a transmitter/receiver having a PLL circuit (1 to 6) which operates on the principle of two-point modulation,
**characterized by**
- the selection of the amplitude of an analogue modulation signal on the basis of the modulation shift of a defined digital modulation signal;
- the application of a predetermined data sequence of the analogue modulation signal;
- the determination of the modulation shift of the analogue modulation signal at an output of the receiver (8); and
- the correction of the amplitude of the analogue modulation signal to match the difference between the modulation shift of the digital modulation signal and the determined modulation shift of the analogue modulation signal.

2. Method according to Claim 1,
**characterized in that**
- the PLL circuit (1 to 6) is set to a channel mid-frequency before a transmission process.

3. Method according to in Claim 1,
**characterized in that**
- the digital modulation signal is deactivated during the trimming process.

4. Method according to Claim 1,
**characterized in that**
- the predetermined data sequence of the analogue modulation signal is applied to a predetermined highpass point (4) in the forward path of the PLL circuit (1 to 6).

5. Method according to Claim 1,
**characterized in that**
- the digital modulation signal is applied to a predetermined low-pass point (6) in the feedback path of the PLL circuit (1 to 6).

6. Method according to Claim 5,
**characterized in that**
- the digital modulation signal is applied to a first frequency divider (6).

7. Method according to one of the preceding claims,
**characterized in that**
- the output signal from the PLL circuit (1 to 6) is passed to a second frequency divider (7), which is located in a signal path which branches off from the feedback path.

8. Method according to Claim 7,
**characterized in that**
- the output signal from the PLL circuit (1 to 6) is divided in the second frequency divider (7), and is then supplied as one of the input signals to the receiver (8).

9. Method according to one of Claims 6 to 8,
**characterized in that**
- the divisor (N₂) of the second frequency divider (7) is selected such that the output frequency from the second frequency divider (7) corresponds to the intermediate frequency of the receiver (8).

10. Method according to one of Claims 6 to 8,
**characterized in that**
- an integer value is selected as a divisor (N₂) for the second frequency divider (7).

11. Method according to Claim 10,
**characterized in that**
- the integer value is selected such that the output frequency of the second frequency divider (7) is in the vicinity of the intermediate frequency of the receiver (8).

## Revendications

1. Procédé d'équilibrage pour un émetteur/récepteur comportant un circuit (1 à 6) PLL travaillant suivant le principe de la modulation à deux points,
**caractérisé par**,
- le choix de l'amplitude d'un signal de modulation analogique suivant l'amplitude de modulation d'un signal de modulation numérique fixé;
- l'application d'une séquence de données prédéterminée du signal de modulation analogique;
- la détermination de l'amplitude de modulation du signal de modulation analogique à une sortie du récepteur (8); et
- la correction de l'amplitude du signal de modulation analogique en coïncidence avec la différence entre l'amplitude de modulation du signal de modulation numérique et l'amplitude de modulation déterminée du signal de modulation analogique.

2. Procédé suivant la revendication 1,
**caractérisé en ce que**,
- le circuit (1 à 6) PLL est réglé avant une opération d'émission à une fréquence centrale de canal.

3. Procédé suivant la revendication 1,
**caractérisé en ce que**,
- le signal de modulation numérique est désactivé pendant l'opération d'équilibrage.

4. Procédé suivant la revendication 1,
**caractérisé en ce que**,
- la séquence de données prédéterminée du signal de modulation analogique est appliquée à un point (4) passe haut prédéterminé dans la branche aller du circuit (1 à 6) PLL.

5. Procédé suivant la revendication 1,
**caractérisé en ce que**,
- le signal de modulation numérique est appliqué à un point (6) passe bas prédéterminé dans la branche retour du circuit (1 à 6)PLL.

6. Procédé suivant la revendication 5,
**caractérisé en ce que**,
- le signal de modulation numérique est appliqué dans un premier diviseur (6) de fréquence.

7. Procédé suivant l'une des revendications précédentes,
**caractérisé en ce que**,
- on fait passer le signal de sortie du circuit (1 à 6) PLL envoyé dans un deuxième diviseur (7) de fréquence, se trouvant dans une voie de signaux dérivant de la branche de retour.

8. Procédé suivant la revendication 7,
**caractérisé en ce que**,
- le signal de sortie du circuit (1 à 6) PLL est divisé dans le deuxième diviseur (7) de fréquence et ensuite envoyé au récepteur (8) comme l'un des signaux d'entrée.

9. Procédé suivant l'une des revendications 6 à 8,
**caractérisé en ce que**,
- la valeur (N₂) de division du deuxième diviseur (7) de fréquence est choisie de manière que la fréquence de sortie du deuxième diviseur (7) de fréquence corresponde à la fréquence intermédiaire du récepteur (8).

10. Procédé suivant l'une des revendications 6 à 8,
**caractérisé en ce que**,
- on choisit comme valeur (N₂) de division du deuxième diviseur (7) de fréquence une valeur en nombre entier.

11. Procédé suivant la revendication 10,
**caractérisé en ce que**,
- la valeur en nombre entier est choisie de manière que la fréquence de sortie du deuxième diviseur (7) de fréquence vienne à se trouver proche de la fréquence intermédiaire du récepteur (8).
